# EUROPEAN PATENT APPLICATION

(11) **EP 2 092 832 A1**
(43) Date of publication of application: **26.08.2009**
(21) Application number: 07730350.1
(22) Date of filing: 28.02.2007
(51) Int. Cl.: A23C 3/03, A23L 3/16

(54) **METHOD FOR UHT TREATMENT OF MILK WITH A HIGH PROTEIN CONTENT**

(30) Priority: 27.10.2006 ES 200602743
(71) Applicant: Leche Gaza, S.L., 49026 Zamora (ES)
(72) Inventor: MARTINEZ ALONSO, Sergio, 27002 Lugo (ES); MAGDALENA VERA, Jaime, 27002 Lugo (ES); MENDEZ DONEGA, Juan, 27002 Lugo (ES); BERTERRECHE ALVAREZ, Javier, 43007 Sant Pere I Sant Pau (Tarragona) (ES)
(74) Representative: Carpintero Lopez, Francisco
(86) International application number: PCT/ES2007/000109
(87) International publication number: WO 2008/049939

(57) **Abstract**

The invention defines a method for the UHT treatment of milk with a high protein content, **characterised in that** it comprises the following steps:
(a) high pasteurization and homogenization of the previously fat-standardized milk;
(b) addition of transglutaminase enzyme to the milk obtained in step (a) and incubation at a temperature of 4ºC-40ºC for 2-36 hours; and
(c) high-intensity heat treatment of the mixture obtained in step (b),

wherein the milk is stabilized by the addition of a stabilizer selected from a phosphate salt, a citrate salt and a combination thereof. Said method allows for the UHT sterilisation of milks with a high protein content such that they have a long preservation time at ambient temperature, whilst maintaining their nutritional and organoleptic properties, and exhibiting a protein sedimentation analogous to that of UHT cow's milk.

## Description

### FIELD OF THE INVENTION

The invention relates to the field of dairy products; more specifically, to the sterilisation of milk by means of a high-intensity heat treatment. In particular, the invention relates to a method for the UHT (Ultra-High Temperature) treatment of milk with a high protein content.

### BACKGROUND OF THE INVENTION

As is well known in the state of the art, UHT sterilisation followed by packaging under aseptic conditions makes it possible to obtain products that may be preserved at ambient temperature for long periods of time whilst maintaining their nutritional and organoleptic properties.

In the UHT treatment of cow's milk, the latter is subjected to a high-temperature heat treatment for a short period of time. In this way, the microorganisms and sporulated forms present therein are destroyed and adequate commercial sterility is achieved whilst maintaining its nutritional and sensory qualities.

The classic high-intensity UHT heat treatment of cow's milk may be applied using two heating systems: the direct system and the indirect system, depending on whether or not the heating fluid is in direct contact with the milk. In the case of the indirect system, the cow's milk, which enters at about 4ºC-8ºC, is pre-heated to about 70ºC-85ºC, subsequently homogenized in one or two steps at a pressure of 150-250 bar (15-25 MPa), heated to a temperature of 140ºC-145ºC, and kept at that temperature for about 3-8 seconds; it is finally cooled to 155ºC-25ºC and packaged. In the case of the direct system, the cow's milk, which enters at about 4ºC-8ºC, is pre-heated to about 70ºC-125ºC, subsequently heated to a temperature of 140ºC-155ºC and kept at that temperature for about 3-8 seconds; it is then subjected to a partial vacuum (flash cooling) and quickly cooled to 70ºC-125ºC; it is subsequently cooled to 70ºC-85ºC and homogenized in one or two steps at a two steps at a pressure of 150-250 bar (15-25 MPa); finally, it is cooled to 15ºC-25ºC and packaged (see, for example, patent ES 2235430).

Furthermore, in addition to UHT cow's milk, over the past few years, UHT goat's milk has been commercialised which has a protein content similar to that of cow's milk. This is the case with milk from very specific goat breeds (Alpine and Saanen), which has low protein content (2.8-3.1 %) and greater stability against heat treatments. In any event, these products usually exhibit high protein aggregation and sedimentation rates.

Indeed, when the treated milk is a milk with a high protein content, such as sheep's or goat's milk, the UHT method has significant disadvantages. In fact, after being subjected to a classic UHT treatment, this type of milk exhibits high sedimentation once it is packaged, due to the formation of protein aggregates and precipitates during the heat treatment.

In fact, no products from sheep's or goat's milk with a high protein content subjected to UHT treatment are known in the state of the art which have a preservation time at ambient temperature, with adequate organoleptic qualities, greater than 90 days.

Therefore, the state of the art still needs a method of obtaining a UHT sheep's or goat's milk, amongst other high-protein milks, designed for direct consumption, which has a sedimentation analogous to that of UHT cow's milk.

Surprisingly, these inventors have discovered that the addition of transglutaminase enzyme and a stabilizer based on phosphate and/or citrate salts, combined with prior high pasteurization of the milk with a high protein content, allow for the high-intensity UHT heat treatment thereof with optimal results in terms of the formation of protein aggregates and precipitates after packaging.

Transglutaminase (TGase) (EC 2.3.2.13) is an enzyme that catalyses acyl transfer reactions between γ-carboxamide groups of glutamine residues and the ε-amino group of lysine residues of proteins, leading to an inter- or intra-molecular cross-linkage that affects the functional properties of foods which contain them (hydration, gelation, rheology, emulsion, etc.). Consequently, this enzyme has been used for a long time in food applications, particularly in the manufacturing of fish products such as surimi (Sakamoto et al., J. Food Sci. 1995, 60, 300-304) or codfish roes (JP 7099942). Likewise, it has been used to elaborate prepared meats, such as chicken sausages (Muguruma et al., 45th International Congress of Meat Science and Technology Congress Proceedings 1999, 1, 138-139) or restructured meat (Kuraishi et al., J. Food Sci. 1997, 62, 488-490, 515). On the other hand, its use in the preparation of pasta and noodles (Soeda et al., JP 5244887) and in soybean products like tofu (Nonaka et al., Food Hydrocolloids 1996, 10, 41-44), and in bakery products (EP 0760209) and jellies (JP 6292521), is widely known. In the field of dairy products, due to its gelifying and emulsifying properties, it has been used in the production of yoghurt (EP 0610649), cheese (EP 0711504) and ice-creams (JP 6303912).

However, to this date, the transglutaminase enzyme has not been used in UHT methods of obtaining a long-life milk.

On the other hand, phosphate and citrate salts are habitually used in cow dairy products for the manufacturing of cheeses (ES 2039185, ES 2091624, ES 204455) or to obtain calcium-enriched milks (ES 2022323) or long-life milks.

However, the combination of transglutaminase enzyme and phosphate and/or citrate salts to be used in the processing of sheep's or goat's milk, or the use thereof, jointly with a prior high pasteurization of this type of milk, have not been disclosed.

Therefore, the method of this invention, which combines these technical characteristics, allows for the UHT sterilisation of a sheep's or goat's milk with a high protein content that has a long preservation time (greater than 90 days) at ambient temperature, whilst maintaining its nutritional and organoleptic properties.

### OBJECT OF THE INVENTION

Therefore, the object of this invention is to provide a method for the UHT treatment of milk with a high protein content.

### DESCRIPTION OF THE FIGURES

- Figure 1: shows the sedimentation of UHT sheep's milk obtained by the method of the invention as an increase in the dispersion of the light reflected by the lower part of the tube (on the left side of the graph) containing a sample of said milk.
- Figure 2: shows the sedimentation of UHT sheep's milk obtained by a conventional method as an increase in the dispersion of the light reflected by the lower part of the tube (on the left side of the graph) containing a sample of said milk.

### DETAILED DESCRIPTION OF THE INVENTION

This invention provides a method for the UHT treatment of milk with a high protein content, characterised in that it comprises the following steps:
(a) high pasteurization and homogenization of the previously fat-standardized milk;
(b) addition of transglutaminase enzyme to the milk obtained in step (a) and incubation at a temperature of 4ºC-40ºC for 2-36 hours; and
(c) high-intensity heat treatment of the mixture obtained in step (b);
   wherein the milk is stabilized by the addition of a stabilizer selected from a phosphate salt, a citrate salt and a combination thereof.

Within the context of this invention, the term "milk with a high protein content" refers to any milk with a protein content greater than that of cow's milk, i.e. greater than 3.3% (w/w).

The method of the invention makes it possible to achieve protein stability against high-intensity heat treatment in milks that are especially sensitive to heating, due to their high protein content and the nature of their proteins, as in the case of sheep's milk or goat's milk.

The starting milk to be used in the method of the invention is usually raw milk, whether from sheep, goats or other animals, whose protein content is greater than that of cow's milk, as already mentioned.

Thus, in a particular embodiment of the method of the invention, the starting milk with a high protein content is sheep's milk.

In another particular embodiment of the method of the invention, the starting milk with a high protein content is goat's milk.

Once received, the raw milk is optionally subjected to thermising by heat treatment, usually at a temperature of about 72 ºC, for a short time of about 15 seconds.

These operations are performed under the habitual conditions and with the habitual devices used in the state of the art. Thus, the reception and pre-treatment process line is equipped with heating devices, such as, for example, plate heat exchangers, and stirring and mixing devices.

The starting milk, thermised or not, is fat-standardized in order to achieve a given fat content. Preferably, it is standardized to a fat content of 1.55% (w/w), given the recent trend to prepare low-fat food products, as in the case of semi-skimmed or skim milks. Said fat standardization may be performed by any conventional method known in the state of the art, such as, for example, centrifugal skimming.

Once the starting milk is standardized, it is subjected to high pasteurization by the adequate heat treatment.
Thus, in a particular embodiment of the method of the invention, in step (a), the high pasteurization of the previously standardized milk is performed at a temperature of 80ºC-95ºC for 15-300 seconds. In a preferred embodiment, the high pasteurization is performed at 85ºC for 180 seconds.

In another particular embodiment of the method of the invention, in step (a), the homogenization is performed at a pressure of 5-15 MPa in a first step and, optionally, at 0-5 MPa in a second step. In a preferred embodiment, the homogenization in step (a) is performed at a pressure of 10 MPa in a first step and, optionally, at 2.5 MPa in a second step. The selection of the type of homogenization to be performed, in one or two steps, will be made by the person skilled in the art.

Said high pasteurization may be performed in a heat exchanger, normally a plate heat exchanger, using the same heating device used for the initial thermising or another one. Similarly, the person skilled in the art will select the adequate type of homogenizer.

The pasteurized milk is subsequently cooled to the adequate temperature prior to adding the transglutaminase enzyme and starting incubation of the milk therewith.

Thus, as specified further below, the pasteurized milk is cooled to a temperature within the range of 4ºC-40ºC, preferably to a temperature of 6ºC-15ºC and, more preferably, to 8ºC.

Said cooling is performed using any device known in the state of the art for that purpose, such as, for example, a plate cooler.

The pasteurized milk is then subjected to incubation with transglutaminase enzyme.

As previously discussed, transglutaminase enzyme is an enzyme that catalyses acyl transfer reactions between glutamine and lysine residues of food proteins, with the resulting formation of cross-linkages that lead to substantial changes in the structure thereof and, consequently, in the functional properties of the food products whereto it is incorporated.

In the method of the invention, transglutaminase enzyme from any source may be used, provided that it has activity as such. Thus, transglutaminase of animal origin, such as that from fish, guinea pig liver or bovine plasma, or transglutaminase of microbial origin, such as that isolated from *Streptoverticillium sp,* may be used. Microbial *Streptoverticillium sp* transglutaminase commercialised by Ajinomoto Europe Sales (Stubbenhuk 3, D-20459, Hamburg, Germany) is preferred.

In a particular embodiment of the method of the invention, 0.001-0.01 g of transglutaminase enzyme are added per gram/litre of protein in the treated milk. In a preferred embodiment, transglutaminase enzyme is added in a proportion of 0.005 g of enzyme per g/I of protein contained in the treated milk.

As previously mentioned, the incubation is performed at an optimal temperature for enzyme activity, which is always lower than the pasteurization temperature.

In a particular embodiment of the method of the invention, the incubation is performed at a temperature of 6ºC-155ºC for 10-26 hours. In a preferred embodiment, the incubation is performed at a temperature of 8ºC for 20 hours.

Following incubation of the milk with the transglutaminase enzyme, the high-intensity UHT heat treatment is performed. This treatment may be performed by direct heating or by indirect heating, as previously discussed.

Direct heating is performed by directly mixing sterile steam with the milk to be treated by means of steam injection, using a steam injector known in the state of the art, or by means of steam infusion, pumping the milk through a distribution nozzle in a high-pressure vacuum chamber, using an infuser known in the state of the art. Following the high-temperature heating (140ºC-150ºC), and maintaining this temperature for about 3-6 seconds, the milk goes on to a vacuum chamber, where the water incorporated during the heating step is eliminated and the already-sterilised milk is cooled to a temperature of 70ºC-80ºC.

On the other hand, indirect heating is performed by heat transfer from a hot fluid (for example, water), by convection inside the fluid and by conduction through the separation wall, using tubular, plate or scratched-surface heat exchangers, preferably made of stainless steel, widely known in the state of the art.

Direct heating is preferred, since proteins are exposed to high temperatures for shorter periods of time than in indirect heating.

Thus, in a particular embodiment of the method of the invention, the high-intensity heat treatment is performed by direct heating at a temperature of 145ºC-155ºC for 2-30 seconds. In a preferred embodiment, the high-intensity heat treatment is performed by direct heating at 150ºC for 6 seconds.

Following the UHT heat treatment by direct heating, a second, aseptic-phase homogenization is performed in one or two steps. This second homogenization is performed at a pressure of 15-25 MPa, preferably 20 MPa, in a first step and, optionally, at 0-7.5 MPa, preferably 5 MPa, in a second step. The selection of the type of homogenization to be performed, in one or two steps, will be made by the person skilled in the art in accordance with conventional homogenization technology.

In another particular embodiment of the method of the invention, the high-intensity heat treatment is performed by indirect heating at a temperature of 140ºC-145ºC for 2-30 seconds. In a preferred embodiment, the high-intensity heat treatment is performed by indirect heating at 142ºC for 5 seconds.

Optionally, prior to this direct or indirect UHT heat treatment, the milk is subjected to pre-heating at a temperature of about 75ºC-110ºC, preferably at 80ºC, for 15-90 seconds, preferably 60 seconds.

As discussed above, the method of the invention uses a stabilizer based on phosphate salts, citrate salts or a combination of both, which may be added prior to pasteurization of the milk, prior to the addition of the enzyme or prior to the high-intensity UHT heat treatment.

Thus, in a particular embodiment of the method of the invention, the addition of the stabilizer is performed prior to step (c), the high-intensity heat treatment.

In another particular embodiment of the method of the invention, the addition of the stabilizer is performed prior to step (a), the high pasteurization.

In another particular embodiment of the method of the invention, the addition of the stabilizer is performed prior to step (b), the addition of the transglutaminase enzyme.

The phosphate and/or citrate salt that may be used in the method of the invention may be any phosphate and/or citrate salt authorised by the prevailing food legislation. Thus, the phosphate salts that may be used include: sodium orthophosphates (monosodium, disodium or trisodium phosphate), potassium orthophosphates (monopotassium, dipotassium and tripotassium phosphate), disodium diphosphate, trisodium diphosphate, pentasodium triphosphate and polyphosphates such as, for example, sodium hexametaphosphate. The citrate salts that may be used include sodium citrates, such as, for example, sodium citrate monobasic or sodium citrate dibasic. A mixture of phosphates commercialised by Giulini Chemie GMBH, called Turrisin ST, is preferred.

In a particular embodiment of the method of the invention, the stabilizer is a phosphate salt. Likewise, in a particular embodiment, said phosphate salt is added in a quantity of 0.1-1.2 g of phosphate salt per litre of treated milk. In a preferred embodiment, a quantity of 1 g of phosphate salt is added per litre of treated milk. In any event, the quantity of phosphate and/or citrate salts to be added will depend on the prevailing legislation (European Directive 95/2/EEC). For example, in the case of cow's milk, for example, the maximum permitted quantity of phosphate salts is 1 g/I, although there are no rules for sheep's milk.

Finally, the milk subjected to the high-intensity UHT heat treatment is cooled to between 15ºC and 30ºC, and aseptically packaged by any method known in the state of the art.

The following example illustrates the invention and should not be considered to limit the scope thereof.

### EXAMPLE 1

Manufacturing of UHT sheep's milk in accordance with the method of the invention.

10,000 I of raw sheep's milk were discharged in a reception line equipped with a tank and a plate heat exchanger, and begun to be stirred. Subsequently, a sample thereof was taken and analysed in a Milkoscan device in order to determine the composition thereof (Table 1).

**Table 1. Analysis of the raw milk**

| T(ºC) | pH | Acidity (ºD) | FC(%) | Prot(%) | Lact(%) | TDE(%) | FDE(%) |
|---|---|---|---|---|---|---|---|
| 10.5 | 6.71 | 19 | 6.34 | 4.79 | 4.51 | 16.37 | 10.02 |

| | | | | | | | |
|---|---|---|---|---|---|---|---|
| FC: Fat content Prot: Proteins Lact: Lactose TDE: Total dry extract FDE: Fat-free dry extract (Percentages in weight/volume) | | | | | | | |

Subsequently, the milk was thermised by heat treatment at 72ºC for 15 seconds using a plate heat exchanger, and the fat content thereof was simultaneously adjusted, by means of centrifugal skimming, to approximately 1.55% by weight. The thermised, standardized milk was subsequently analysed in order to determine the composition thereof (Table 2).

**Table 2. Analysis of the thermised, standardized milk**

| T(ºC) | pH | Acidity (ºD) | FC(%) | Prot(%) | Lact(%) | TDE(%) | FDE(%) |
|---|---|---|---|---|---|---|---|
| 7.5 | 6.74 | 19.5 | 1.70 | 5.05 | 5.00 | 12.48 | 10.77 |

| | | | | | | | |
|---|---|---|---|---|---|---|---|
| FC: Fat content Prot: Proteins Lact: Lactose TDE: Total dry extract FDE: Dry extract (fat-free) (Percentages in weight/volume) | | | | | | | |

Subsequently, high pasteurization of the thermised, standardized milk was performed by heat treatment at 85ºC for 180 seconds, at a homogenization pressure of 10 MPa and a flow rate of 3,500 I/h. Subsequently, the pasteurized milk was cooled to a temperature of 8ºC and analysed in order to determine the composition thereof (Table 3).

**Table 3. Analysis of the pasteurized milk**

| T(ºC) | pH | Acidity (ºD) | FC(%) | Prot(%) | Lact(%) | TDE(%) | FDE(%) |
|---|---|---|---|---|---|---|---|
| 8.8 | 6.72 | 19.5 | 1.76 | 4.95 | 4.94 | 12.36 | 10.60 |

| | | | | | | | |
|---|---|---|---|---|---|---|---|
| FC: Fat content Prot: Proteins Lact: Lactose TDE: Total dry extract FDE: Dry extract (fat-free) (Percentages in weight/volume) | | | | | | | |

The pasteurized milk was then sent to the incubation tank in order to add the transglutaminase enzyme and perform the incubation. To this end, 10 I of pasteurized milk were removed, whereto 0.25 g/I of final volume of transglutaminase enzyme Active MP from Ajinomoto were added. The temperature of the incubation tank was adjusted to 8ºC, under constant stirring to favour dispersion of the enzyme, and the mixture was incubated for 20 h at that temperature, still under stirring. After this period, a sample was taken in order to analyse the milk with transglutaminase enzyme (Table 4).

**Table 4. Analysis of the milk with transglutaminase enzyme**

| T(ºC) | pH | Acidity (ºD) | FC(%) | Prot(%) | Lact(%) | TDE(%) | FDE(%) |
|---|---|---|---|---|---|---|---|
| 8 | 6.71 | 20 | 1.77 | 4.94 | 4.94 | 12.36 | 10.59 |

| | | | | | | | |
|---|---|---|---|---|---|---|---|
| FC: Fat content Prot: Proteins Lact: Lactose TDE: Total dry extract FDE: Dry extract (fat-free) (Percentages in weight/volume) | | | | | | | |

Subsequently, the phosphate salts were added. To this end, 15 I of milk were removed through the lower part of the tank and mixed with 1 g/I of final volume of Turrisin ST (mixture of phosphate salts commercialised by Giulini Chemie GMBH), under stirring, prior to adding them to the tank once again. Constant stirring was maintained therein in order to favour dispersion of the salts. Prior to performing the high-intensity UHT heat treatment, a new analysis was performed (Table 5).

**Table 5. Analysis of the milk with transglutaminase enzyme + phosphate salts**

| T(ºC) | pH | Acidity (ºD) | FC(%) | Prot(%) | Lact(%) | TDE(%) | FDE(%) |
|---|---|---|---|---|---|---|---|
| 8 | 6.91 | 20.5 | 1.79 | 4.97 | 5.00 | 12.48 | 10.69 |

| | | | | | | | |
|---|---|---|---|---|---|---|---|
| FC: Fat content Prot: Proteins Lact: Lactose TDE: Total dry extract FDE: Dry extract (fat-free) (Percentages in weight/volume) | | | | | | | |

The milk was then subjected to pre-heating at 80ºC for 30 seconds and, subsequently, to heat treatment by direct heating at 150ºC for 6 seconds, followed by a second homogenization at a pressure of 20 MPa. To this end, a steam injector, an expansion hood and an aseptic homogenizer were used.

Finally, the milk was cooled to 22ºC and the UHT sheep's milk thus obtained was aseptically packaged in 1-I Tetra-Brik-type packages.

A sedimentation assay was performed in order to determine the stability during the commercial life of the UHT sheep's milk obtained by the method of the invention and the UHT sheep's milk obtained by a conventional method, as previously indicated.

The method used to determine the stability consisted of measuring the optical properties of samples of milk obtained by both methods and preserved at different temperatures between 20ºC and 35ºC, at 3-week intervals until the 5-month useful life thereof had elapsed.

In order to measure these properties, a Turbiscan T.LAB (Formulaction, France) was used; this is an optical device that makes it possible to characterise dispersions, suspensions or emulsions, and to obtain information about sedimentation, in addition to other phenomena such as clarification, creaming, flocculation or coalescence. Thus, it makes it possible to analyse the milk samples' changes in turbidity through time and, therefore, to study the stability thereof.

The light source is an electroluminescent diode with a wavelength within the near infrared range (880 nm). Two optical sensors receive, respectively, light transmitted through the sample (the transmission detector is located at 180º with respect to the incident beam) and light reflected by the sample (in this case, the detector is located at an angle of 45º with respect to the incident beam).

Therefore, this experimental equipment may provide different magnitudes, such as the transmitted and the reflected light, the width of the layer formed (during sedimentation, as well as clarification or creaming), the particle migration velocity, the evolution of the mean particle diameter as a function of time, etc.

The dispersion values obtained for the reflected light (backscattering) (expressed as the percentage of reflected light) through time were represented against the height of the tube containing each of the two samples (mm).

The sedimentation is observed as an increase in the dispersion reflected in the lower area of the sample (left side of the graph). The creaming is observed as an increase in the dispersion reflected in the upper area of the sample (right side of the graph). If there are any particle size change, coalescence or flocculation phenomena, a change in the dispersion reflected in the middle area of the sample would be observed (middle part of the graph).

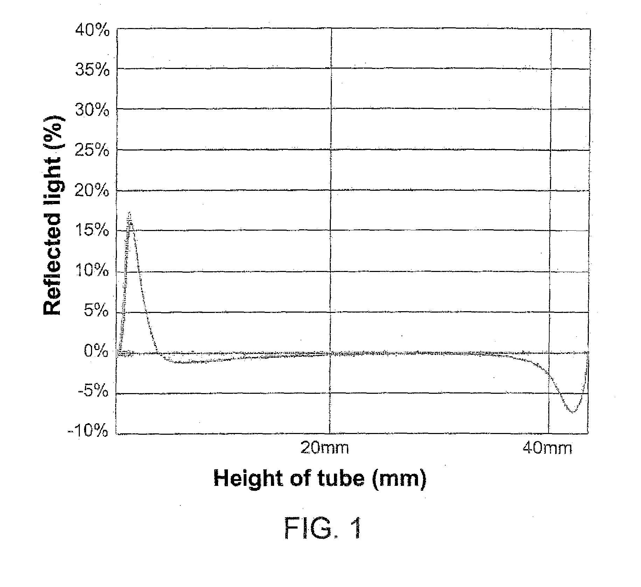

Figure 1 shows that, after 5 months preserved at 25ºC, sedimentation of the UHT sheep's milk obtained by the method of the invention is minimal: a minimal sedimentation arising from a mild protein precipitation is reflected on the left area of the graph (which corresponds to the lower part of the tube containing the sample). The inverted peak observed on the right side of the graph corresponds to clarification (loss of protein matter on the upper part of the tube).

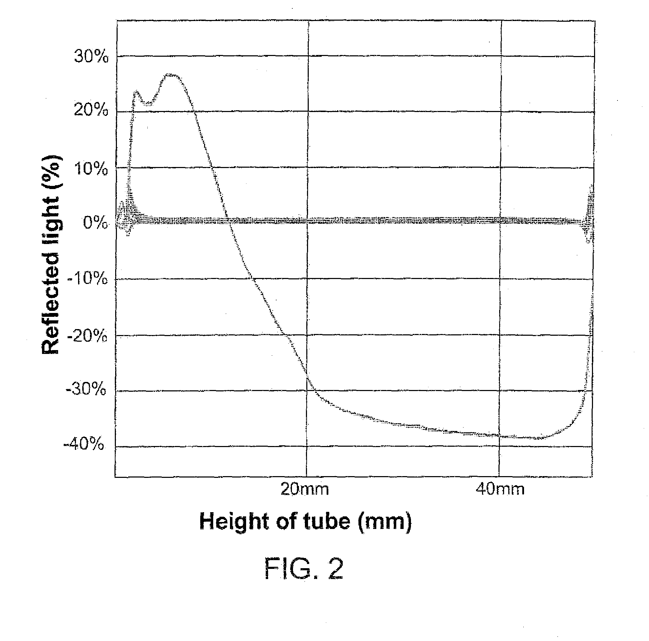

Figure 2 shows greater sedimentation of the UHT sheep's milk obtained by a conventional method: a very high peak may be observed on the left side, which refers to the protein sedimentation resulting from the heat treatment.

## Claims

1. A method for the UHT treatment of milk with a high protein content, **characterised in that** it comprises the following steps:
(a) high pasteurization and homogenization of the previously fat-standardized milk;
(b) addition of transglutaminase enzyme to the milk obtained in step (a) and incubation at a temperature of 4ºC-40ºC for 2-36 hours; and
(c) high-intensity heat treatment of the mixture obtained in step (b); wherein the milk is stabilized by the addition of a stabilizer selected from a phosphate salt, a citrate salt and a combination thereof.

2. Method according to claim 1, **characterised in that** the milk with a high protein content is sheep's milk.

3. Method according to claim 1, **characterised in that** the milk with a high protein content is goat's milk.

4. Method according to claim 1, **characterised in that** the addition of the stabilizer is performed prior to step (c), the high-intensity heat treatment.

5. Method according to claim 1, **characterised in that** the addition of the stabilizer is performed prior to step (a), the high pasteurization.

6. Method according to claim 1, **characterised in that** the addition of the stabilizer is performed prior to step (b), the addition of transglutaminase enzyme.

7. Method according to claim 1, **characterised in that** the stabilizer is a phosphate salt.

8. Method according to claim 7, **characterised in that** 0.1-1.2 g of phosphate salt are added per litre of treated milk.

9. Method according to claim 8, **characterised in that** 1 g of phosphate salt is added per litre of treated milk.

10. Method according to claim 1, **characterised in that,** in step (b), 0.001-0.01 g of transglutaminase enzyme are added per gram/litre of protein in the treated milk.

11. Method according to claim 10, **characterised in that,** in step (b), 0.005 g of transglutaminase enzyme are added per gram/litre of protein in the treated milk.

12. Method according to claim 1, **characterised in that,** in step (b), the incubation is performed at 6ºC-15ºC for 10-26 hours.

13. Method according to claim 12, **characterised in that,** in step (b), the incubation is performed at 8ºC for 20 hours.

14. Method according to claim 1, **characterised in that,** in step (a), the high pasteurization is performed at a temperature of 80ºC-95ºC for 15-300 seconds.

15. Method according to claim 14, **characterised in that,** in step (a), the high pasteurization is performed at a temperature of 85ºC for 180 seconds.

16. Method according to claim 1, **characterised in that,** in step (a), the homogenization is performed at a pressure of 5-15 MPa in a first step and, optionally, at 0-5 MPa in a second step.

17. Method according to claim 16, **characterised in that,** in step (a), the homogenization is performed at a pressure of 10 MPa in a first step and, optionally, at 2.5 MPa in a second step.

18. Method according to claim 1, **characterised in that,** in step (c), the high-intensity heat treatment is performed by direct heating at a temperature of 1445ºC-1555ºC for 2-15 seconds.

19. Method according to claim 18, **characterised in that,** in step (c), the high-intensity heat treatment is performed by direct heating at 150ºC for 6 seconds.

20. Method according to claim 1, **characterised in that,** in step (c), the high-intensity heat treatment is performed by indirect heating at a temperature of 140ºC-1445ºC for 2-30 seconds.

21. Method according to claim 20, **characterised in that,** in step (c), the high-intensity heat treatment is performed by indirect heating at 142ºC for 5 seconds.
